# FASCICULE DE BREVET EUROPEEN

(11) **EP 3 728 863 B1**
(45) Date de publication et mention de la délivrance du brevet: **29.01.2025**
(21) Numéro de dépôt: 18826615.9
(22) Date de dépôt: 18.12.2018
(51) Int. Cl.: F15B 3/00, F15B 11/032, F15B 15/28

(54) **SYSTÈME COMPRENANT UN AMPLIFICATEUR DE PRESSION HYDRAULIQUE**
SYSTEM BEINHALTEND EINEN HYDRAULISCHEN DRUCKVERSTÄRKER
SYSTEM COMPRISING A HYDRAULIC PRESSURE AMPLIFIER

(30) Priorité: 18.12.2017 FR 1762372
(43) Date de publication de la demande: 28.10.2020
(73) Titulaire: Poclain Hydraulics Industrie, 60410 Verberie (FR)
(72) Inventeur: PRIGENT, André, 60410 VERBERIE (FR); HEREN, Jean, 60410 VERBERIE (FR); TENAUD, Benjamin, 60410 VERBERIE (FR)
(74) Mandataire: Regimbeau
(86) Numéro de dépôt international: PCT/EP2018/085636
(87) Numéro de publication internationale: WO 2019/121770

(56) Documents cités:
- CA-A- 1 015 639
- DE-A1- 102012 018 724
- DE-B3- 102014 214 739
- FR-A1- 3 020 841
- GB-A- 768 258
- US-A1- 2009 317 267

## Description

La présente invention concerne le domaine des dispositifs générateurs de pression hydraulique.

Plus précisément, la présente invention concerne le domaine des amplificateurs de pression hydraulique.

La présente invention trouve par exemple application dans la réalisation d'un amplificateur de pression hydraulique destiné à assurer l'alimentation d'une réserve de fluide hydraulique sous haute pression permettant l'actionnement de freins d'un véhicule, par exemple mais non limitativement d'une remorque.

On connaît différents systèmes amplificateurs de pression hydraulique.

On connaît en particulier des amplificateurs de pression hydraulique à piston. De tels amplificateurs à piston sont notamment commercialisés par la société Minibooster.

Les amplificateurs de pression hydraulique à piston comprennent généralement un boîtier comprenant deux chambres de sections différentes qui logent un piston étagé comprenant deux tronçons de piston dont les sections sont respectivement complémentaires desdites chambres.

Lorsqu'une pression hydraulique est appliquée dans une chambre d'entrée basse pression sur le tronçon de piston de grande section, on recueille une pression plus élevée dans une chambre de sortie contenant le tronçon de piston de faible section.

Le rapport de pression entre la pression appliquée dans la chambre d'entrée et la pression régnant dans la chambre de sortie est égal au rapport entre les sections des deux tronçons de piston.

Le piston est déplacé à translation dans le boîtier, en va-et-vient successifs, par contrôle par des valves de détection adaptées pilotées mécaniquement en fin de course du piston, en combinaison avec une valve bistable sensible à l'état des valves de détection qui assure cycliquement l'alimentation et la décharge de la chambre d'entrée et la vidange de la chambre de sortie haute pression.

L'inversion du mouvement de piston repose sur la maîtrise des jeux de fonctionnement très précis des tiroirs de pilotage intégrés dans les valves de détection.

Le contrôle en déplacement du piston impose des cycles successifs comprenant l'alimentation de la chambre d'entrée pour déplacer le piston dans un premier sens vers la chambre haute pression afin d'obtenir la haute pression, puis la décharge de la chambre d'entrée pour déplacer le piston dans le sens opposé et le ramener en position d'origine, avant d'initier un nouveau cycle.

Le document FR 3 020 841 présente un détendeur de fin de course pour convertisseur de pression à pistons. Comme tous les convertisseur de pression connus jusqu'ici ce document préconise d'utiliser un capteur de position du piston.

Le document CA 1 015 639 A présente un autre exemple connu de dispositif amplificateur de pression hydraulique.

Les systèmes amplificateurs de pression connus ont déjà rendu de grands services.

Cependant, ils sont complexes, coûteux et conduisent à des pulsations de pression dues, selon l'analyse des inventeurs, à une inversion brutale du sens de déplacement du piston.

La présente invention a pour but dans ce contexte de proposer un système amplificateur de pression présentant des performances supérieures aux systèmes connus de l'état de la technique.

Ce but est atteint selon la présente invention grâce à un système comprenant un dispositif amplificateur de pression hydraulique selon la revendication 1.

D'autres caractéristiques avantageuses de l'invention sont décrites dans les revendications dépendantes.

L'invention concerne également les véhicules équipés d'un système du type précité.

L'invention concerne par ailleurs un procédé d'amplification de pression hydraulique selon la revendication 16.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique du circuit hydraulique d'un dispositif amplificateur de pression hydraulique conforme à la présente invention,
- la figure 2 représente le fonctionnement général d'un dispositif conforme à la présente invention dans le cadre d'un pilotage par des moyens de contrôle formés d'une commande électronique pilotée par une base de temps ; plus précisément, la figure 2a représente les cycles d'ouverture d'un distributeur contrôlant l'alimentation du boîtier de l'amplificateur, tandis que la figure 2b représente les cycles de déplacement du piston,
- la figure 3 représente schématiquement, selon une vue en coupe longitudinale, une valve permettant de contrôler la pression d'entrée du dispositif conforme à la présente invention,
- la figure 4 représente les cycles de déplacement du piston en fonction d'une pression mesurée en sortie d'un gicleur de l'installation,
- la figure 5 représente un organigramme de fonctionnement du dispositif conforme à la présente invention dans le cas d'un contrôle par une pression mesurée et
- la figure 6 représente une autre variante de réalisation conforme à la présente invention selon laquelle le convertisseur comprend deux chambres travaillant en augmentation de pression respectivement sur les deux phases de déplacement en aller et retour du piston.

Comme on l'a indiqué précédemment, selon une caractéristique essentielle de l'invention, les moyens de contrôle de déplacement du piston intégré à l'amplificateur de pression hydraulique sont formés d'une commande électronique pilotée par des moyens d'estimation de fin de course du piston.

Plus précisément, comme on le décrira par la suite, ces moyens de contrôle comprennent un distributeur piloté électroniquement et non pas par des butées mécaniques de fin de course.

On va tout d'abord décrire, un premier mode de réalisation conforme à la présente invention selon lequel, les mouvements du tiroir d'un distributeur de contrôle et les déplacements en conséquence du piston d'un amplificateur de pression sont pilotés sur la base d'une base de temps et non pas par une détection mécanique de fin de course, pour limiter le nombre de composants du système.

Plus précisément dans ce cas la base de temps prédéfinit cycliquement une période de durée imposée d'alimentation de la chambre d'entrée du boitier amplificateur, puis une période de décharge de durée imposée de la chambre d'entrée du boitier amplificateur.

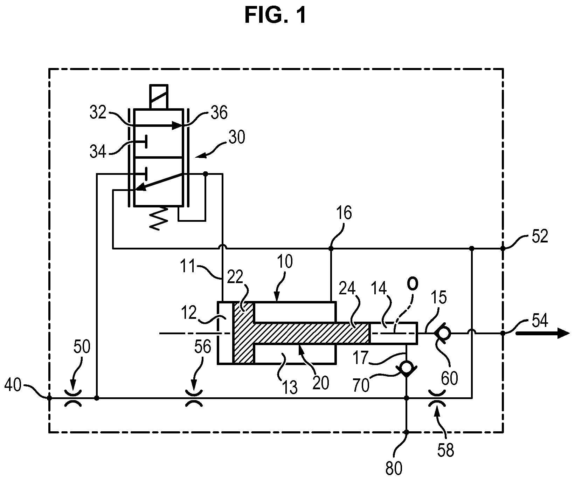

Comme on le voit sur la figure 1 annexée, le dispositif amplificateur de pression hydraulique conforme à la présente invention comprend un boîtier 10 qui comporte deux chambres principales 12, 14 qui logent un piston étagé 20.

La première chambre principale 12, qui constitue une chambre d'entrée basse pression, a une section constante sur toute sa longueur.

La deuxième chambre principale 14, qui constitue une chambre de sortie haute pression, a également une section constante sur toute sa longueur. Cependant la section droite de la deuxième chambre principale 14 haute pression est plus faible que la section droite de la première chambre principale 12 basse pression.

Le piston étagé 20 comprend deux tronçons 22, 24 de sections respectivement complémentaires desdites chambres 12, 14.

Le piston étagé 20 est ainsi monté à translation dans le boitier 10 selon l'axe longitudinal O-O du boitier 10.

Plus précisément encore, le boîtier 10 définit une chambre intermédiaire 13 entre la chambre d'entrée 12 basse pression et la chambre de sortie 14 haute pression. La chambre intermédiaire 13 a la même section que la chambre d'entrée 12 basse pression.

Le premier tronçon 22 du piston 20, de section droite complémentaire de la chambre d'entrée basse pression 12 et de la chambre intermédiaire 13, est ainsi monté à coulissement à translation dans les chambres d'entrée 12 et intermédiaire 13.

Le tronçon de petite section 24 du piston 20 est monté à translation dans la chambre de sortie 14. Il se situe également en partie dans la chambre intermédiaire 13.

Les volumes des chambres principales 12, 14 et de la chambre intermédiaire 13 sont variables. Les volumes de la chambre intermédiaire 13 et de la chambre principale de sortie 14 se réduisent lorsque le volume de la chambre principale d'entrée 12 augmente et inversement.

Chacune des chambres 12, 13, 14 possède des ports de communication qui permettent alternativement l'alimentation ou l'évacuation de la chambre correspondante.

La chambre d'entrée basse pression 12 possède un port 11 qui sert alternativement de port d'entrée pour son alimentation et de port de sortie pour sa décharge.

La chambre de sortie haute pression 14 possède un port de sortie 15 pour sa décharge et un port d'entrée 17 pour son alimentation.

La chambre intermédiaire 13 possède un port 16 qui sert alternativement de port d'entrée pour son alimentation et de port de sortie pour sa décharge.

Le dispositif illustré sur la figure 1 comprend en outre un distributeur de commande 30.

Le distributeur 30 a pour fonction de contrôler l'alimentation et la décharge de la chambre d'entrée 12 basse pression et en conséquence l'alimentation et la décharge de la chambre de la sortie haute pression 14.

Le distributeur 30 peut être formé typiquement d'une valve trois ports et deux positions.

Sur la figure 1, on a référencé 32, 34 et 36 ces trois ports. Le port 32 est un port d'entrée. Le port 34 est un port de sortie. Le port 36 sert alternativement de port de sortie lors de l'alimentation de la chambre d'entrée basse pression 12 et d'entrée lors de la décharge de la chambre d'entrée basse pression 12.

L'entrée 32 est reliée à une entrée 40 d'alimentation en fluide, par l'intermédiaire d'une restriction de débit 50, formée typiquement d'un gicleur.

L'entrée 40 peut être alimentée typiquement par une pompe hydraulique elle-même actionnée par un moteur principal, par exemple un moteur thermique.

Le port 34 est relié à la chambre intermédiaire 13 par l'intermédiaire du port 16 et à un réservoir par l'intermédiaire d'un port de sortie 52.

Le port 36 est relié à la chambre d'entrée basse pression 12 par l'intermédiaire du port 11.

Dans une première position, le port 36 est relié à l'entrée 32.

Dans une deuxième position, le port 36 est relié à la sortie 34.

Une deuxième restriction de débit 56, typiquement un gicleur, est placée entre la sortie de la restriction 50 (soit le point commun à cette restriction 50 et à l'entrée 32 du distributeur 30) et un point de mesure de pression 80.

Une troisième restriction de débit 58, typiquement un gicleur, est placée entre la sortie de la deuxième restriction 56 (soit le point commun à cette restriction 56 et au point de mesure de pression 80) et la sortie 52 reliée au réservoir.

Le gicleur 58 est dimensionné pour imposer un débit très limité. Il sert à créer une fuite permanente afin qu'une chute de pression, consécutive par exemple à une rupture d'attelage entre un tracteur portant le moyen d'alimentation sur le port d'entrée 40 et la remorque équipée d'un dispositif de freinage, soit bien détectée.

Un clapet anti-retour 60 est placé entre la sortie 15 de la chambre de sortie haute pression 14 et une sortie 54 sur laquelle est disponible la haute pression hydraulique fournie par le dispositif.

Le clapet anti-retour 60 est passant dans le sens de la sortie 15 du boîtier vers le port de sortie 54 et s'ouvre par conséquent lorsque la pression sur la sortie 15 du boîtier est supérieure à la pression régnant sur le port de sortie 54.

Un autre clapet anti-retour 70 est placé entre l'entrée 17 de la chambre de sortie haute pression 14 et le point commun aux gicleurs 56 et 58 et au point de mesure 80.

Le clapet anti-retour 70 est passant dans le sens conduisant vers la chambre de sortie 14.

Le clapet anti-retour 70 s'ouvre par conséquent lorsque la pression dans la chambre 14 devient inférieure à la pression régnant sur l'entrée du clapet 70.

En position d'origine, la chambre d'entrée basse pression 12 est vide et la chambre intermédiaire 13 occupe son volume maximal.

Lorsqu'un fluide en provenance du port d'entrée 40 est injecté par le port 11 dans la chambre d'entrée basse pression 12, par l'intermédiaire de la restriction 50 et du distributeur 30 placé en première position, le piston 20 est déplacé vers la chambre de sortie 14. La chambre d'entrée basse pression 12 s'expanse et inversement la chambre intermédiaire 13 se rétracte.

A l'origine la chambre de sortie 14 occupe son volume maximal.

Une fois le piston 20 déplacé par alimentation de la chambre d'entrée 12, la chambre de sortie 14 occupe un volume minimal mais à haute pression, le fluide contenu précédemment dans la chambre de sortie haute pression 14 étant évacué vers la sortie 54 par l'intermédiaire du clapet anti-retour 60. La chambre de sortie 14 peut ainsi délivrer un fluide haute pression sur le port de sortie 15, et donc sur la sortie 54 par l'intermédiaire du clapet anti-retour 60.

Pendant cette phase de sortie du piston 20, la chambre intermédiaire 13 est progressivement vidée vers le réservoir par le port 16.

La chambre d'entrée 12 est ainsi définie entre une extrémité d'un tronçon de grande section du boîtier 10 et le tronçon 22 de grande section 22 du piston 20.

La chambre intermédiaire 13 est définie entre le même tronçon de grande section 22 du piston 20 et l'extrémité opposée du tronçon de grande section du boîtier 10.

La chambre de sortie 14 est définie entre l'extrémité du tronçon 24 de petite section du piston 20 et l'extrémité en regard du tronçon de petite section du boîtier 10.

Dans la deuxième position du distributeur 30, le port 36 est relié à la sortie 34. Ainsi, la chambre d'entrée 12 est reliée au réservoir par l'intermédiaire du distributeur 30 et du port 52, ce qui autorise la décharge de la chambre d'entrée 12 vers le réservoir et le déplacement en sens inverse du piston 20 vers la chambre d'entrée 12.

La chambre de sortie 14 est alors alimentée par l'intermédiaire du clapet anti-retour 70 relié au port d'entrée 40, par l'intermédiaire des gicleurs 50 et 56 précités.

Pendant cette phase de rentrée du piston 20, la chambre intermédiaire 13 est progressivement remplie par le fluide présent dans la chambre d'entrée 12 par l'intermédiaire du distributeur 30, via le port 16.

Dans le cadre du premier mode de réalisation conforme à la présente invention, les mouvements du tiroir du distributeur 30, et ce faisant les déplacements du piston 20, sont pilotés par une base de temps et non pas par une information de fin de course mécanique comme cela était le cas dans les solutions connues de l'état de la technique.

Cette disposition conforme à la présente invention permet de limiter le nombre de composants par rapport aux solutions connues.

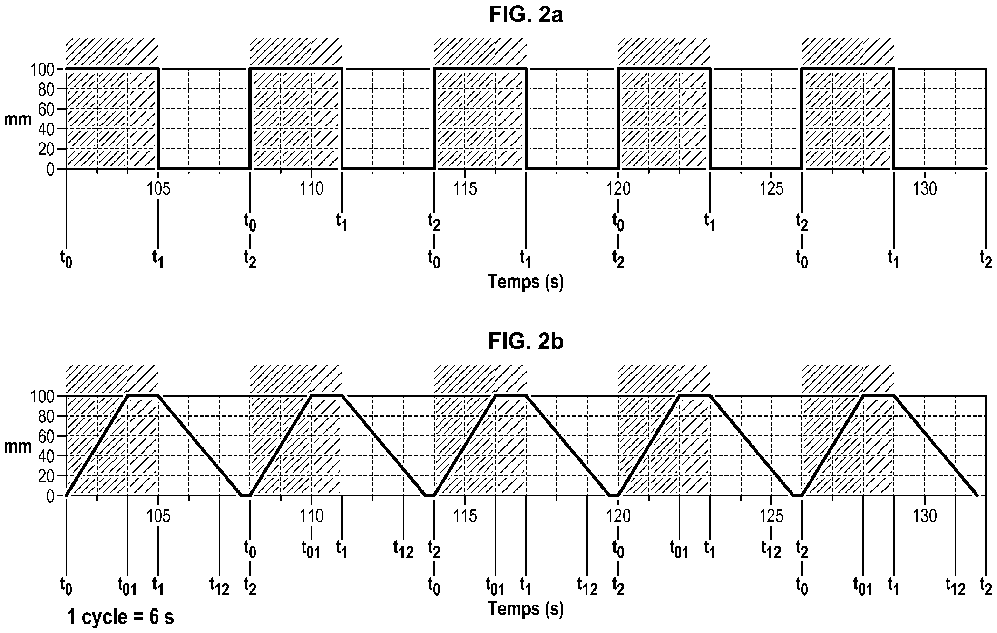

On aperçoit sur la figure 2a, les signaux définissant les créneaux d'ouverture du distributeur 30, c'est-à-dire les créneaux imposés par une base de temps pendant lesquels le port 36 est relié à l'entrée 32 pour permettre l'alimentation de la chambre d'entrée 12 par le fluide provenant du port d'entrée d'alimentation 40.

Sur la figure 2a, l'on a représenté les cycles de commande correspondant à une ouverture du distributeur 30 (liaison du port 36 avec l'entrée 32) entre les instants t0 et t1 et inversement à une fermeture du distributeur 30 (liaison du port 36 avec la sortie 34) pendant les phases de temps entre t1 et t2.

Une fois un cycle de t0 à t2 accompli, un cycle suivant reprenant les périodes t0 à t1 d'ouverture, puis de t1 à t2 de fermeture, est réitéré et ainsi de suite.

On a représenté également sur la figure 2b, les cycles de déplacement du piston 20.

Le piston 20 est déplacé dans le sens de l'expansion de la chambre 12 entre les instants t0 et t01, pendant l'ouverture du distributeur 30. Puis, le piston 20 ayant atteint sa fin de course en expansion, reste immobile entre les instants t01 et t1 qui correspond à la fin d'ouverture du distributeur 30.

Le piston 20 est ensuite déplacé dans le sens d'une rétractation de la chambre d'entrée 12 entre les instants t1 et t12, l'instant t12 coïncidant avec la fin de course du piston 20 en rétractation.

Le piston 20 ayant atteint sa fin de course en rétractation reste ensuite immobile entre les instants t12 et t2, l'instant t2 avec la reprise d'un cycle d'ouverture du distributeur 30 à l'instant t0.

Le cycle de t0 à t2 du mouvement du piston 20 est ensuite réitéré en synchronisme avec l'ouverture et la fermeture du distributeur 30 comme illustré sur la figure 2b.

Les phases d'extension du piston 20 entre les instants t0 et t01 et les phases de rétractation du piston 20 entre les instants t1 et t12, sont de préférence opérées à vitesse de déplacement constante du piston 40 par commande du distributeur 30.

On notera à l'examen des figures 2a et 2b que le temps d'ouverture du distributeur 30 permettant l'alimentation de la chambre d'entrée 12 entre t0 et t1 et le temps de fermeture du port 32 du distributeur 30 entre t1 et t2 sont supérieurs aux temps de t0 à t01 et de t1 à t12 requis pour assurer des courses complètes du piston 20 respectivement aller et retour.

Plus précisément on notera à l'examen des figures 2, que le temps d'ouverture entre t0 et t1 du distributeur 30 est supérieur au temps entre t0 et t01 requis pour assurer la pleine expansion du piston 20 tandis que la période de t1 à t2 de fermeture du port 32 du distributeur 30 est supérieure à la période de t1 à t12 requise pour assurer la rétractation du piston 20.

A titre d'exemple non limitatif, un cycle complet de t0 à t2 peut durer par exemple 6 secondes.

L'homme de l'art comprendra que dans le cadre de ce premier mode de réalisation, le distributeur 30 est donc piloté par la base de temps définie par les cycles d'ouverture imposés de t0 à t1 et les cycles de fermeture imposés de t1 à t2.

Dans ce cas, les estimations de fin de course pilotant le distributeur 30 sont définies par la séquence imposée par la base de temps, c'est-à-dire les instants t0, t1 et t2. Plus précisément les estimations de fin de course pilotant le distributeur 30 sont définies par la période de durée imposée par la base de temps, d'alimentation de la chambre d'entrée du boitier amplificateur qui prend fin à l'instant t1, puis la période de durée imposée par la base de temps, de décharge de la chambre d'entrée du boitier amplificateur qui prend fin à l'instant t2.

Selon le premier mode de réalisation conforme à la présente invention, les estimations de fin de course du piston 20 correspondent donc aux instants t1 et t2 prédéfinis et imposés par la base de temps.

On va maintenant décrire un second mode de réalisation conforme à la présente invention, selon lequel le distributeur 30, associé à la restriction 50, pilote l'alimentation de la chambre d'entrée basse pression 12 par une commande proportionnelle de sorte que le piston 20 ne génère pas de pulsation sur les orifices d'entrée 11 et de sortie 15 et par conséquent sur les orifices d'entrée 40 et de sortie 54. Dans ce mode de réalisation le distributeur 30 est piloté sur la base d'une pression mesurée sur le port 80.

Cette mesure de pression a pour but de donner un signal représentant le niveau de pression sur un port du boitier amplificateur de pression permettant de détecter lorsque le piston 20 est immobilisé et par conséquent est arrivé en fin de course.

La commande proportionnelle permet d'éviter une accélération trop forte du piston 20 qui conduirait à consommer rapidement tout le débit disponible sur l'entrée 40 et ferait baisser la pression pendant le mouvement du piston 20, pouvant générer en conséquence des vibrations.

Cette commande permet d'assurer à la fois une course rapide du piston 20 et d'éviter une surconsommation sur la ligne de l'alimentation 40.

La mesure de pression peut être faite à l'aide de tout capteur de pression classique connu installé sur l'orifice 80 de mesure.

Le gicleur 50 installé sur la ligne d'entrée entre le port d'entrée 40 et le port 32 du distributeur 30 permet, grâce au capteur placé sur le port 80, de mesurer d'une part le niveau de pression disponible sur l'entrée **11** de la chambre d'entrée basse pression 12 lorsque le piston 20 est immobile et le niveau de pression sur la même entrée **11** de la chambre basse pression 12 lorsque le piston 20 est déplacé en translation en extension.

L'écart entre ces deux mesures de pression représente une image du débit consommé par le boitier pour alimenter la chambre d'entrée basse pression 12.

Ainsi lorsque la pression mesurée au point 80, lors de la phase d'alimentation de la chambre d'entrée 12, devient égale à la pression de référence existant lorsque le piston 20 est immobile, le système estime que le piston est arrivé en fin de course d'alimentation ou extension.

On notera que pendant la sortie du piston 20, le gicleur 56 n'impacte pas la mesure de la pression au niveau du gicleur d'entrée 50 prélevée sur le point de mesure 80 car le débit à travers le gicleur 56 est très faible.

Ceci est dû notamment au fait que le gicleur de sortie 58 est très petit comme indiqué précédemment.

La vitesse de déplacement en extension du piston 20, qui dépend du débit injecté dans la chambre d'entrée 12, est contrôlée par la taille du gicleur 50.

La vitesse de sortie du piston 20 est calculée à partir de la différence de pression mesurée entre le niveau de pression disponible sans mouvement du piston 20 et la pression mesurée avec le gicleur 50 lorsque le piston 20 est déplacé en extension.

Le même principe de contrôle s'applique pour la rentrée du piston 20, c'est-à-dire le déplacement du piston 20 dans le sens de la rétractation.

Le gicleur 56 installé sur la ligne comprenant le gicleur 50, entre le port d'entrée 40 et clapet anti-retour 70 permet, grâce au capteur placé sur le port 80, de mesurer d'une part le niveau de pression disponible sur l'entrée 17 de la chambre de sortie haute pression 14 lorsque le piston 20 est immobile et le niveau de pression sur la même entrée 17 de la chambre haute pression 14 lorsque le piston 20 est déplacé en translation en rétractation.

L'écart entre ces deux mesures de pression représente une image du débit consommé par le boitier pour alimenter la chambre haute pression 14 dans la phase de rétractation du piston 20.

Ainsi lorsque la pression mesurée au point 80, lors de la phase d'alimentation de la chambre de sortie 14, devient égale à la pression de référence existant lorsque le piston 20 est immobile, le système estime que le piston est arrivé en fin de course de rétractation.

La vitesse de rentrée du piston 20 est calculée à partir de la différence de pression mesurée entre le niveau de pression disponible sans mouvement du piston 20 et la pression mesurée avec le gicleur 56 lorsque le piston 20 est déplacé en rétractation.

Les déplacements du piston 20 sont donc surveillés par une mesure de pression sur la sortie du gicleur 50 pour la phase d'extension du piston 20 au cours de laquelle le système applique une consigne de pression sur la chambre d'entrée basse pression 12, et par une mesure de pression sur la sortie du gicleur 56 pour la phase de rentrée du piston 20 au cours de laquelle le système applique une consigne de pression sur la chambre de sortie haute pression 14.

Un pré-positionnement de consigne de pression sur la chambre d'entrée basse pression 12 peut être réalisé en prenant en compte la pression souhaitée au niveau de l'orifice de sortie 54 et le rapport de surface entre les deux tronçons 22 et 24 du piston 20.

Si l'on prend par exemple une pression souhaitée de sortie Pout de 120 bars sur le port de sortie 54, et un rapport de surface de 10 entre les deux tronçons 22, 24 du piston 20, la pression de commande pour l'équilibre sur l'entrée 11 de la chambre d'entrée 12 est de 12 bars. On peut donc prévoir un distributeur 30 contrôlant la pression sur la sortie 36 à 12 bars.

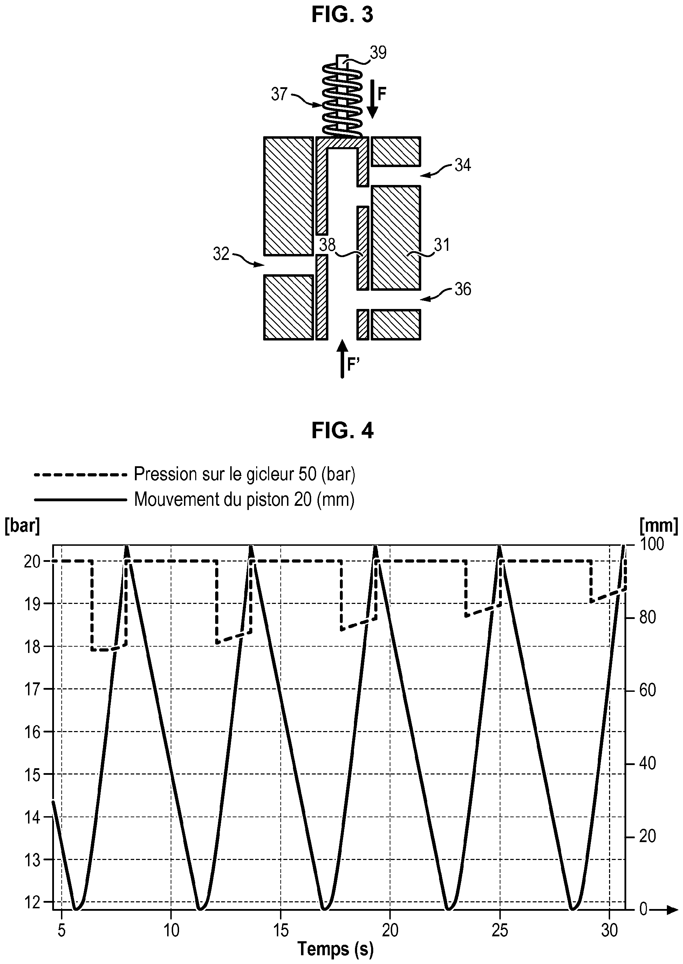

Le pré-positionnement de consigne de pression sur la chambre d'entrée basse pression 12 peut être réalisé grâce à une valve 30 adaptée. On a représenté sur la figure 3 un exemple de réalisation d'une telle valve 30.

La valve 30 représentée sur la figure 3 forme un réducteur de pression. Elle comprend un corps 31 qui loge un tiroir 38. Le corps 31 comprend les ports précités 32, 34 et 36.

Les déplacements du tiroir 38 dans le corps 31 sont pilotés par une force électromagnétique générée par une bobine 37 qui coopère avec un plongeur 39 solidaire du tiroir 38.

A un courant de pilotage donné sur la bobine 37 correspond une pression en sortie sur l'orifice 36 car la valve 30 comporte une contre-réaction hydraulique qui referme le tiroir 38 lorsque la pression est atteinte.

F est la force électromagnétique qui correspond à un courant injecté dans la bobine 37. La pression disponible sur la sortie 36 s'applique sur toute la surface interne du tiroir 38 et crée donc un effort F', qui correspond à une force hydraulique qui s'oppose à F. Quand F' grandit, le tiroir 38 ferme l'orifice d'entrée 32 sans que la commande en courant F sur la bobine 37 n'ait changé.

La valve 30 représentée sur la figure 3 impose donc une pression de 12 bar sur sa sortie 36 pour pré-positionner la consigne sur la chambre d'entrée basse pression 12.

Si la pression d'entrée P disponible en sortie des moyens appliquant la pression sur l'entrée 40 est cependant de 20 bars, on peut augmenter la pression de commande appliquée sur l'entrée **11** de la chambre d'entrée 12 de 12 bars à 20 bars, éventuellement jusqu'à 20 bars, pour accélérer le piston 20. Il suffit pour cela de piloter en conséquence la valve 30.

L'invention n'est pas limitée à l'utilisation d'une valve 30 du type illustré sur la figure 3 comprenant une contre-réaction hydraulique et permettant un pré-positionnement de pression. L'invention peut utiliser d'autres types de valves proportionnelles 30 qui n'ont pas une telle contre-réaction hydraulique.

Il existe par exemple des valves proportionnelles qui n'ont pas de correspondance entre un courant de pilotage et une pression de sortie, mais entre un courant et une section d'ouverture. Dans ce cas, un prépositionnement de pression n'est pas possible et dans le cadre de l'invention on gère alors l'accélération du piston uniquement en comparant la pression de l'orifice 80 avant le début du mouvement, et cette même pression en mouvement comme expliqué ci-dessus.

Sans pré-positionnement, la phase d'ouverture de la valve 30 est plus délicate. Pour ne pas écrouler la pression, il faut démarrer le piston doucement. Si on augmente le courant de pilotage de la bobine 37 trop vite, le piston ou tiroir 38 se déplace trop rapidement.

Dans le deuxième mode de réalisation comme indiqué précédemment, la simulation de détection de fin de course est liée à la fin de l'écart de pression mesurée sur les gicleurs 50 ou 56, selon que le piston 20 sort ou rentre, par rapport à une pression de référence établie lorsque le piston 20 est immobile.

En effet la pression reste stable et constante, égale à la pression de référence, lorsque le piston 20 reste immobile.

La vitesse de déplacement en rétractation du piston 20 est contrôlée d'une part par la taille des gicleurs 50 et 56 placés en série et qui contrôlent le débit injecté dans la chambre de sortie 14 à partir du port 40, et d'autre part par les pertes de charge imposées par le distributeur 30 à travers lequel transite le flux évacué de la chambre d'entrée 12 vers le réservoir via le port 54.

On notera cependant que si la valve de pilotage ou distributeur 30 présente un niveau de perte de charge supérieur à un seuil, le gicleur 56 n'intervient pas dans la régulation de la vitesse du piston 20 dans sa course de retour. Dans ce cas en effet la perte de charge nécessaire pour contrôler la phase de rentrée du piston 20, est due au distributeur 30 lui-même et la vitesse du piston 50 se limite seulement à cause des pertes de charge dans la valve de pilotage 30.

La figure 4 représente les cycles de déplacement du piston 20 en fonction d'une pression mesurée sur le gicleur 50.

Comme on le voit sur la figure 4, la pression mesurée sur le gicleur 50 croit progressivement lors de l'avancée du processus d'amplification de pression hydraulique en raison de la contre-pression croissante appliquée sur la sortie 54.

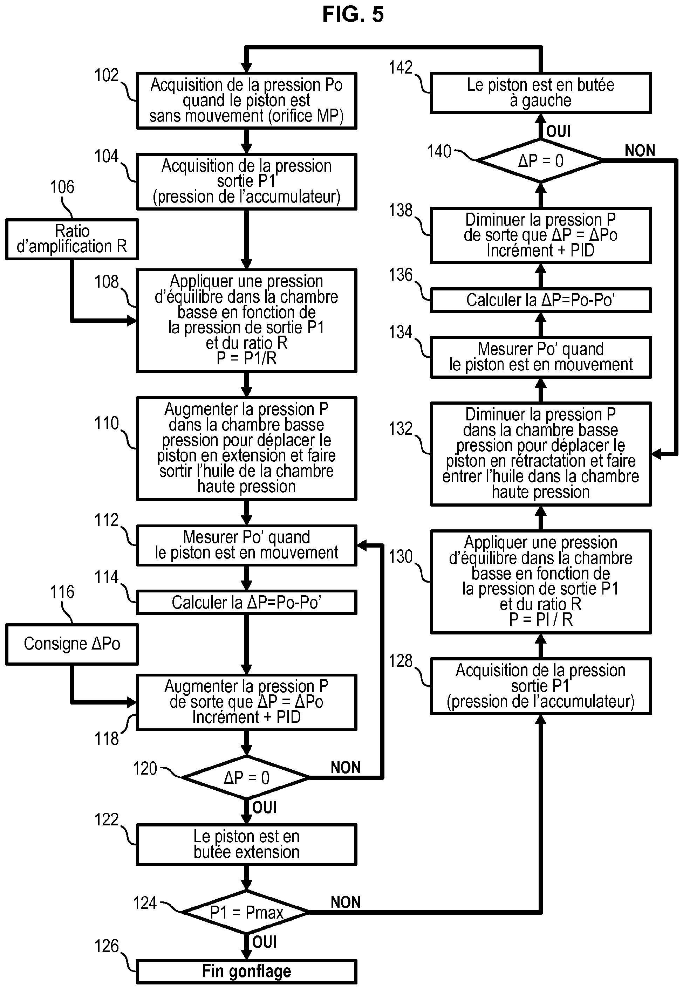

La figure 5 représente un organigramme de fonctionnement du dispositif dans le cadre du deuxième mode de réalisation conforme à la présente invention.

On aperçoit sur cette figure 5 un procédé 100 qui comprend les étapes suivantes :
. Acquisition d'une pression d'entrée Po quand le piston 20 est immobile, de préférence par mesure de la pression sur le gicleur 50 accessible au niveau de l'orifice de mesure 80 (le gicleur 56 n'ayant pas d'impact sur cette mesure) (étape 102),
. Acquisition de la pression P1 régnant dans l'accumulateur connecté sur la sortie haute pression 54 (étape 104),
. Définir le rapport entre les sections des deux tronçons 22 et 24 du piston 20 qui correspond au rapport d'amplification de pression (étape 106),
. Application d'une pression d'équilibre P sur la chambre d'entrée basse pression 12 de sorte que P = P1/R (étape 108),
. Augmenter la pression P dans la chambre d'entrée basse pression 12 pour déplacer le piston 20 vers la chambre de sortie 14 et faire sortir l'huile de la chambre haute pression vers l'accumulateur via le port de sortie 54 (étape 110),
. Acquisition de la pression Po' sur le gicleur 50 quand le piston 20 est mobile, par mesure de la pression sur le gicleur 50 accessible au niveau de l'orifice de mesure 80 (le gicleur 56 n'ayant pas d'impact sur cette mesure) (étape 112),
. Calculer l'écart de pression ΔP = Po - Po' (étape 114),
. Définir une consigne de pression ΔPo (étape 116),
. Augmenter la pression P dans la chambre d'entrée basse pression 12 de sorte que ΔP = ΔPo par incréments successifs et une commande de type PID (étape 118),
. Opérer un test recherchant si ΔP = 0 (étape 120) ; dans la négative continuer le processus au niveau de l'étape 112,
. Au contraire si le test de l'étape 120 est positif, considérer que la simulation d'atteinte de fin de course du piston 20 en extension est validée (étape 122),
. Opérer un test recherchant si P1 = Pmax (étape 124),
. Si le test de l'étape 124 est positif, considérer que le procédé a atteint l'étape de fin de gonflage (étape 126),
. Au contraire si le test de l'étape 124 est négatif, le piston 20 ayant atteint sa butée de fin de course en extension sans que la pression de consigne dans l'accumulateur ne soit atteinte, continuer le processus par une série d'étapes contrôlant la séquence de rentrée du piston 20 et débutant par une étape qui consiste à acquérir la nouvelle valeur de pression P1 régnant dans l'accumulateur connecté sur la sortie haute pression 54 (étape 128),
. Application d'une pression d'équilibre P sur la chambre d'entrée basse pression 12 de sorte que P = P1/R (étape 130),
. Réduire la pression P dans la chambre d'entrée basse pression 12 pour rétracter le piston 20, faire sortir l'huile de la chambre basse pression 12 et faire rentrer l'huile dans la chambre haute pression 14 via le port d'entrée 17 (étape 132),
. Acquisition de la pression Po' sur le gicleur 56 quand le piston 20 est mobile, par mesure de la pression accessible au niveau de l'orifice de mesure 80 (étape 134),
. Calculer l'écart de pression ΔP = Po - Po' (étape 136),
. Diminuer la pression P dans la chambre d'entrée basse pression 12 de sorte que ΔP = ΔPo par incréments successifs et une commande de type PID (étape 138),
. Opérer un test recherchant si ΔP = 0 (étape 140) ; dans la négative continuer le processus au niveau de l'étape 134,
. Au contraire si le test de l'étape 140 est positif, considérer que la simulation d'atteinte de fin de course du piston 20 en rétractation est validée (étape 142), mais la pression de consigne dans l'accumulateur n'étant pas atteinte (voir étape 124 antérieure), reprendre le processus par la série d'étapes destinées à contrôler la séquence de sortie du piston 20 débutant par l'étape 120 précitée.

Dans le cas où on utilise un distributeur 30 formé d'une valve proportionnelle et non pas un limiteur de débit piloté du type illustré sur la figure 3, Les étapes précitées 108 et 130 sont omises.

On va maintenant décrire le troisième mode de réalisation conforme à la présente invention.

Selon ce troisième mode de réalisation, le déplacement du piston 20 est piloté par une référence de temps basée sur un débit disponible. Plus précisément la référence de temps pour la phase d'alimentation est définie comme étant le temps nécessaire pour remplir la chambre d'entrée 12 connaissant le débit disponible sur l'entrée 40, plus précisément après passage à travers le gicleur 50 et le distributeur 30 placés en série du port 11 dans la phase d'alimentation. La référence de temps pour la phase de rétractation du piston 20 est quant à elle définie comme étant le plus contraignant d'une part du temps nécessaire pour remplir la chambre de sortie 14 connaissant le débit disponible sur l'entrée 40, plus précisément après passage à travers les gicleurs 50 et 56 placés en série du port 17 et d'autre part du temps nécessaire pour vider la chambre d'entrée 12 à travers les pertes de charge du distributeur 30.

Ainsi connaissant le débit disponible à partir de la source qui alimente le port d'entrée 40 d'une part et le volume de la chambre d'entrée 12 de l'amplificateur hydraulique d'autre part, le distributeur 30 est piloté à l'ouverture sur une durée suffisante pour assurer l'alimentation de la chambre d'entrée 12 à l'aide du débit disponible, respectivement l'alimentation de la chambre de sortie et la vidange de la chambre d'entrée.

A titre d'exemple, si le débit disponible en entrée sur le port 40 est de 10 I/mn et que le volume de la chambre d'entrée 12 est de 38,5cc, on sait que le temps normal pour accomplir la course est de 2,3 secondes environ.

Le temps de référence pour la phase d'alimentation sera alors à la base de 2,3 secondes.

Si cependant au bout de ces 2,3 secondes, la pression mesurée sur le gicleur 50 n'est pas redevenue égale à la pression de référence lorsque le piston 20 est immobile, ce qui indiquerait la fin de course du piston 20, il est possible que la température soit plus basse que lors de la mesure du temps de référence.

Le système pilote alors l'ensemble pour déterminer un nouveau temps de référence permettant d'accomplir la course complète du piston 20. On peut par ailleurs en déduire la température et ajuster en conséquence l'écart de pression mesurée sur les gicleurs, le débit et donc la pression de commande.

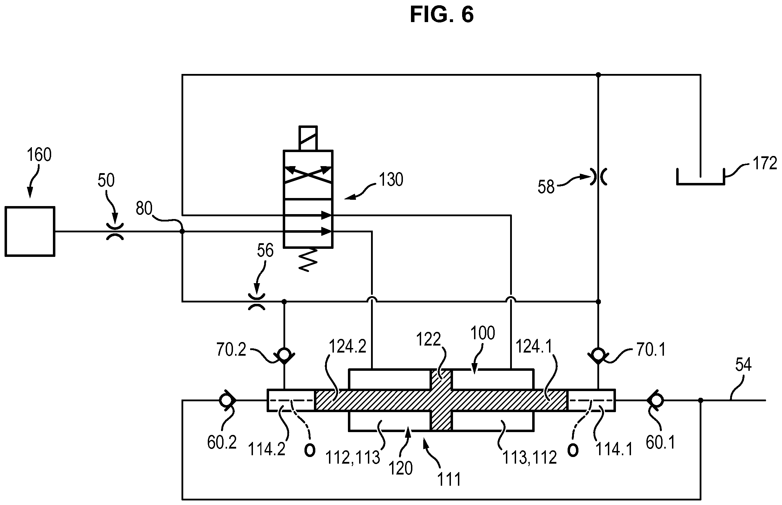

On a représenté sur la figure 6, une variante de réalisation selon laquelle le piston 120 travaille à l'augmentation de pression à la fois sur son trajet aller et sur son trajet retour en déplacement.

Pour ce faire, le dispositif convertisseur présente une symétrie par rapport au plan moyen du tronçon 122 de piston, transversal à l'axe de déplacement O-O.

Ainsi, selon le mode de réalisation représenté sur la figure 6, le piston comprend un tronçon central 122 de grande section, prolongé respectivement de part et d'autre par deux tronçons 124.1 et 124.2 de plus faible section.

Le boîtier 100 possède une chambre centrale **111** dans laquelle se déplace le tronçon 122 de grande section du piston. Le tronçon 122 de grande section du piston 120 divise ainsi la chambre centrale **111 en** deux sous-chambres qui forment respectivement et alternativement chambre d'entrée 112 et chambre intermédiaire 113 selon le cycle de déplacement du piston aller ou retour.

Le boîtier 100 possède par ailleurs de part et d'autre de la chambre centrale 111 deux chambres latérales formant alternativement des chambres de sortie haute pression 114.1 et 114.2. Les deux chambres latérales de sortie 114.1 et 114.2 accueillent respectivement l'un des tronçons 124.1 et 124.2 de faible section du piston.

On observe sur la figure 6, des clapets anti-retour 60.1 et 60.2 reliés respectivement aux chambres de sortie 114.1 et 114.2 et débouchant sur une canalisation reliée par exemple à l'entrée d'un accumulateur de pression. Les clapets anti-retour 60.1 et 60.2 sont passant dans le sens des chambres de sortie 114.1 et 114.2 vers l'accumulateur de pression.

On a enfin représenté schématiquement sur la figure 6, une source de pression 160 reliée par l'intermédiaire d'un distributeur 130, quatre voies, deux positions, et par l'intermédiaire d'un réducteur ou gicleur 50, alternativement à l'une des deux sous-chambres de la chambre principale 111. Le distributeur 130 relie l'autre sous-chambre de la chambre principale 111 à un réservoir 172 à pression atmosphérique.

La course aller du piston 120, choisie arbitrairement de gauche à droite, est obtenue lorsque le distributeur 130 est placé dans une position telle que la sous-chambre gauche de la chambre principale 111 est alimentée par la source de pression 160. Le volume de la sous-chambre gauche de la chambre principale 111 s'expanse et au contraire les volumes de la sous-chambre droite de la chambre principale 111 et de la chambre de sortie droite 114.1 se réduisent. Cette chambre de sortie droite 114.1 monte en pression. Le fluide sous haute pression disponible dans la chambre de sortie droite 114.1 est dirigé vers la sortie, par exemple vers l'accumulateur de pression via le clapet anti-retour 60.1. Simultanément la chambre de sortie gauche 114.2 s'expanse. Elle est alimentée par le clapet anti-retour 70.2.

Pour le mode de réalisation de la figure 6, la restriction 56 n'est pas indispensable. Le point de mesure 80 peut être pris en sortie du gicleur 50. Un seul gicleur 50 est d'ailleurs nécessaire.

Symétriquement la course retour du piston 120, choisie arbitrairement de droite à gauche, est obtenue lorsque le distributeur 130 est placé dans une position telle que la sous-chambre droite de la chambre principale 111 est alimentée par la source de pression 160. Le volume de la sous-chambre droite de la chambre principale 111 s'expanse et au contraire les volumes de la sous-chambre gauche de la chambre principale 111 et de la chambre de sortie gauche 114.2 se réduisent. Cette chambre de sortie gauche 114.2 monte en pression. Le fluide sous haute pression disponible dans la chambre de sortie gauche 114.2 est dirigé vers la sortie, par exemple l'accumulateur de pression, via le clapet anti-retour 60.2. Simultanément la chambre droite de sortie 114.1 s'expanse. Elle est alimentée par le clapet anti-retour 70.1 par l'intermédiaire de la réduction 56.

Le montage à double chambre illustré sur la figure 6 permet de régulariser les débits de pilotage, de fuite et le débit sortant dirigé vers la sortie, par exemple vers l'accumulateur de pression. Il permet également de diminuer par deux le temps de remplissage de cet accumulateur.

La présente invention offre, par rapport à l'état de la technique, de nombreux avantages, notamment un encombrement plus faible, une facilité d'usinage et un coût de revient plus faible, un nombre réduit de pièces et un niveau sonore amélioré.

L'on notera en particulier que l'invention permet de s'affranchir de la nécessité d'intégrer dans le boitier 10 des valves de détection pilotées mécaniquement en fin de course du piston. L'absence de telles valves mécaniques de détection et donc de tiroirs de distribution hydraulique correspondant intégrés à l'amplificateur 10 simplifie l'usinage du corps de l'amplificateur.

La commande électronique conforme à l'invention, permet de réduire le bruit des vibrations engendrées par le changement de direction du piston.

Le dispositif conforme à la présente invention peut s'appliquer notamment à l'alimentation d'un système de freinage hydraulique de remorque à plusieurs essieux.

L'invention peut s'appliquer par exemple au système de freinage hydraulique proposé par le Demandeur et décrit dans le document EP 3 103 691.

Réglementairement les textes fixent le volume d'huile qui doit être fourni par un tracteur à une remorque lors d'un freinage à 140cc pendant 0,6s.

Si le volume des actionneurs de la remorque pour le freinage est supérieur, ce qui est le cas des remorques à plusieurs essieux généralement, il est nécessaire de reconstituer un volume hydraulique sous pression sur la remorque.

La seule source de pression disponible généralement est une ligne dont les niveaux sont fixés réglementairement à 12 litres par minute et 15 bars minimum.

Grâce à un amplificateur de pression conforme à la présente invention, on peut transformer la pression en une pression à 150 bars pour un volume 500cc environ stockée dans des accumulateurs sur la remorque.

Par ailleurs l'ensemble des variantes de réalisation proposées dans le cadre de la présente invention permettent de limiter le nombre de composants du système amplificateur par rapport aux dispositifs amplificateurs connus de l'état de la technique.

L'ensemble des variantes de réalisation proposées dans le cadre de la présente invention permettent également d'éviter des pulsations de pression sur les différents orifices du système.

On notera que pour le mode de réalisation de la figure 1, le gicleur 50 est adapté pour passer un gros débit tandis que le gicleur 56 est adapté pour passer un petit débit.

## Revendications

1. Système comprenant :
- un dispositif amplificateur de pression hydraulique comprenant :
-- un boîtier (10; 100) comportant au moins une chambre d'entrée basse pression (12 ; 112, 113) et au moins une chambre de sortie haute pression (14 ; 114.1, 114.2) de sections différentes, qui logent un piston étagé (20 ; 120) comprenant deux tronçons de piston (22, 24 ; 122, 124.1, 124.2) de sections respectivement complémentaires des chambres (12, 14 ; 112, 113, 114.1, 114.2),
-- une entrée d'alimentation (40),
-- des moyens (30 ; 130) de contrôle du déplacement du piston (20; 120), les moyens de contrôle étant formés :
--- d'un distributeur (30 ; 130) qui contrôle l'alimentation de la ou chaque chambre d'entrée basse pression (12 ; 112, 113) et
--- d'une commande électronique du distributeur,
les moyens de contrôle comprenant en outre :
- une restriction de débit (50) entre l'entrée d'alimentation (40) et le distributeur (30 ; 130), et/ou
- une restriction de débit (56) entre l'entrée d'alimentation (40) et la ou chaque chambre de sortie (14 ; 114.1, 114.2).
**caractérisé en ce que** le système comprend des moyens d'estimation des fins de course du piston (20; 120),
les moyens d'estimation étant configurés pour estimer les fins de course du piston sans capteur de fin de course ou butée mécanique de fin de course et pour piloter la commande électronique.

2. Système selon la revendication précédente, dans lequel les moyens d'estimation des fins de course du piston (20) sont configurés pour piloter la commande électronique par une base de temps, de préférence l'estimation des fins de course étant définie par la séquence imposée par la base de temps, laquelle prédéfinit cycliquement une période de durée imposée d'alimentation de la ou de l'une des chambres d'entrée (12 ; 112, 113) du boitier amplificateur puis une période de décharge de durée imposée de la ou de l'une des chambres d'entrée du boitier amplificateur.

3. Système selon l'une des revendications précédentes, dans lequel les moyens d'estimation des fins de course du piston (20; 120) comprennent des moyens (80) de mesure de pression sur un port du boîtier.

4. Système selon la revendication précédente, dans lequel les moyens d'estimation des fins de course du piston (20; 120) sont configurés pour générer un signal de fin de course lorsque les moyens de mesure de pression décèlent une pression stable sur une période déterminée.

5. Système selon l'une des revendications 3 ou 4, dans lequel les moyens d'estimation des fins de course du piston (20; 120) sont configurés pour générer un signal de fin de course lorsque les moyens de mesure de pression décèlent une pression stable égale à une pression de référence régnant en l'absence de déplacement du piston (20; 120).

6. Système selon l'une des revendications 3 à 5, dans lequel les moyens d'estimation des fins de course du piston (20; 120) sont configurés pour mesurer la pression sur l'entrée de la ou de l'une des chambres d'entrée basse pression (12 ; 112, 113) pour la phase d'extension du piston (20; 120).

7. Système selon l'une des revendications 3 à 6, dans lequel les moyens d'estimation des fins de course du piston (20; 120) sont configurés pour mesurer la pression sur l'entrée de la ou de l'une des chambres de sortie haute pression (14 ; 114.1, 114.2) pour la phase de rétractation du piston (20; 120).

8. Système selon l'une des revendications précédentes, dans lequel la restriction de débit (50) entre l'entrée d'alimentation (40) et le distributeur (30 ; 130) est formée par un gicleur.

9. Système selon l'une des revendications précédentes, dans lequel la restriction de débit (56) entre l'entrée d'alimentation (40) et la ou l'une des chambres de sortie (14 ; 114.1, 114.2) du boîtier est formée par un gicleur.

10. Système selon l'une des revendications précédentes, dans lequel les moyens d'estimation des fins de course du piston (20) sont configurés pour piloter la commande électronique par une référence de temps, de préférence la référence de temps pour la phase d'alimentation et d'extension du piston (20; 120) étant définie comme étant le temps nécessaire pour remplir la ou l'une des chambres d'entrée (12 ; 112, 113) du boitier connaissant le débit disponible et la référence de temps pour la phase de rétractation du piston (20; 120) étant quant à elle définie comme étant le plus contraignant d'une part du temps nécessaire pour remplir la ou l'une des chambres de sortie (14 ; 114.1, 114.2) connaissant le débit disponible et d'autre part du temps nécessaire pour vider la chambre d'entrée à travers les pertes de charge du distributeur (30 ; 130).

11. Système selon l'une des revendications précédentes, dans lequel la restriction de débit (50) entre l'entrée d'alimentation (40) et le distributeur étant une première restriction de débit et la restriction de débit (56) entre l'entrée d'alimentation (40) et la ou chaque chambre de sortie (14 ; 114.1, 114.2) étant une deuxième restriction de débit :
- la ou une des chambres d'entrée et la ou une des chambres de sortie forment des chambres principales (12, 14 ; 112, 113, 114.1, 114.2),
- le boîtier (10; 100) comporte en outre une chambre intermédiaire (13 ; 113),
- le piston (20 ; 120) est monté à translation dans le boitier (10),
- la chambre d'entrée possède un port (11) qui sert alternativement de port d'entrée pour son alimentation et de port de sortie pour sa décharge et la chambre de sortie possède un port de sortie (15) pour sa décharge et un port d'entrée (17) pour son alimentation, la chambre intermédiaire (13 ; 113) possédant un port (16) qui sert alternativement de port d'entrée pour son alimentation et de port de sortie pour sa décharge,
- le distributeur (30 ; 130) est formé d'une valve trois ports et deux positions pour contrôler l'alimentation et la décharge de la chambre d'entrée et en conséquence l'alimentation et la décharge de la chambre de sortie ,
- le distributeur a :
-- un premier port (32) relié à l'entrée d'alimentation (40) par l'intermédiaire de la première restriction de débit (50), formée typiquement d'un gicleur,
-- un deuxième port (34) relié à la chambre intermédiaire (13 ; 113) et à un réservoir, et
-- un troisième port (36) relié à la chambre d'entrée, dans une première position du distributeur (30) le premier port (32) étant relié au troisième port (36) et dans une deuxième position le troisième port (36) étant relié au deuxième port (34),
- la deuxième restriction de débit (56), typiquement un gicleur, étant placée entre la sortie de la première restriction (50) et un point de mesure de pression (80),
- une troisième restriction de débit (58), typiquement un gicleur, étant placée entre la sortie de la deuxième restriction (56) et une sortie (52) reliée au réservoir,
- un premier clapet anti-retour (60; 60.1, 60.2) étant placé entre la sortie (15) de la chambre de sortie et une sortie (54) sur laquelle est disponible la haute pression hydraulique fournie par le dispositif, et
- un deuxième clapet anti-retour (70 ; 70.1, 70.2) étant placé entre l'entrée (17) de la chambre de sortie et le point de mesure (80).

12. Système selon l'une des revendications précédentes, dans lequel le distributeur (30 ; 130) est formé d'une valve comprenant une contre-réaction hydraulique, adapté pour prépositionner la valeur de pression appliquée sur la ou chaque chambre d'entrée (12 ; 112 , 113) du boitier (10; 100).

13. Système selon l'une des revendications 1 à 10, qui comprend deux chambres (114.1, 114.2) travaillant en augmentation de pression respectivement sur les courses aller et retour du piston (120), de préférence le dispositif présentant une symétrie par rapport au plan moyen du tronçon (122) de grande section du piston.

14. Système selon la revendication précédente, dans lequel :
- le piston (120) comprend un tronçon central (122) de grande section, prolongé respectivement de part et d'autre par deux tronçons (124.1, 124.2) de plus faible section,
- le boîtier (100) possède une chambre centrale (111) dans laquelle se déplace le tronçon (122) de grande section du piston,
le tronçon (122) de grande section du piston (120) divisant la chambre centrale (111) en deux sous-chambres qui forment respectivement et alternativement chambre d'entrée (112) et chambre intermédiaire (113) selon le cycle de déplacement du piston aller ou retour,
le boîtier (100) possédant par ailleurs de part et d'autre de la chambre centrale (111) deux chambres latérales formant alternativement les chambres de sortie haute pression (114.1, 114.2) accueillant respectivement l'un des tronçons (124.1, 124.2) de faible section du piston,
- le dispositif comprend des clapets anti-retour (70.1, 70.2) reliés aux deux chambres de sortie (114.1, 114.2),
- le dispositif comprend des clapets anti-retour (60.1, 60.2) supplémentaires reliés respectivement aux chambres de sortie (114.1, 114.2) et débouchant sur une canalisation (54) reliée à l'entrée d'un accumulateur de pression, passant dans le sens des chambres de sortie (114.1, 114.2) vers l'accumulateur de pression,
- le dispositif comprend une source de pression (160) et
- le distributeur (130) relie alternativement l'une des deux sous-chambres de la chambre principale (111) à la source de pression (160) et respectivement à un réservoir (172) à pression atmosphérique.

15. Véhicule qui comprend un système conforme à l'une des revendications précédentes.

16. Procédé d'amplification de pression hydraulique à l'aide d'un boîtier (10 ; 100) comportant au moins une chambre d'entrée basse pression (12; 112, 113) et au moins une chambre de sortie haute pression (14; 114.1, 114.2) de sections différentes qui logent un piston étagé (20; 120) comprenant deux tronçons de piston (22, 24 ; 122, 124) de sections respectivement complémentaires des chambres,
le procédé comprenant l'étape consistant à contrôler les déplacements du piston (20; 120) à l'aide d'une commande électronique d'un distributeur (30 ; 130), le distributeur contrôlant l'alimentation de la ou chaque chambre d'entrée basse pression (12 ; 112, 113), et au moyen de :
- une restriction de débit (50) entre une entrée d'alimentation (40) et le distributeur (30 ; 130) et/ou
- une restriction de débit (56) entre l'entrée d'alimentation (40) et la ou chaque chambre de sortie,
le procédé étant **caractérisé en ce que** l'étape de contrôle a lieu en pilotant la commande électronique par des moyens d'estimation des fins de course du piston sans utiliser de capteur de fin de course ou de butée mécanique de fin de course.

## Patentansprüche

1. System, umfassend:
- eine hydraulische Druckverstärkungsvorrichtung, umfassend:
-- ein Gehäuse (10; 100), das mindestens eine Niederdruckeintrittskammer (12; 112, 113) und mindestens eine Hochdruckaustrittskammer (14; 114.1, 114.2) mit unterschiedlichen Querschnitten aufweist, die einen gestuften Kolben (20; 120) aufnehmen, der zwei Kolbenabschnitte (22, 24; 122, 124.1, 124.2) mit jeweils zu den Kammern (12, 14; 112, 113, 114.1, 114,2) komplementären Querschnitten umfasst,
**--** einen Versorgungseinlass (40),
**--** Mittel (30; 130) zur Steuerung der Bewegung des Kolbens (20; 120), wobei die Steuermittel gebildet sind aus:
--- einem Verteiler (30; 130), der die Versorgung der oder jeder Niederdruckeintrittskammer (12; 112, 113) steuert, und
--- einer elektronischen Steuerung des Verteilers,
wobei die Steuermittel ferner umfassen:
- eine Durchflussbeschränkung (50) zwischen dem Versorgungseinlass (40) und dem Verteiler (30; 130), und/oder
- eine Durchflussbeschränkung (56) zwischen dem Versorgungseinlass (40) und der oder jeder Auslasskammer (14; 114.1, 114.2),
**dadurch gekennzeichnet, dass** das System Mittel zur Schätzung der Endstellungen des Kolbens (20; 120) umfasst,
wobei die Schätzmittel ausgelegt sind, um die Endstellungen des Kolbens ohne Endstellungssensor oder mechanischen Endstellungs-Endanschlag zu schätzen und um die elektronische Steuerung zu steuern.

2. System nach vorangehendem Anspruch, wobei die Mittel zur Schätzung der Endstellungen des Kolbens (20) ausgelegt sind, um die elektronische Steuerung durch eine Zeitbasis zu steuern, wobei die Schätzung der Endstellungen vorzugsweise durch die Sequenz definiert ist, die von der Zeitbasis vorgegeben wird, die zyklisch eine vorgegebene Zeitdauerperiode der Versorgung der oder von einer der Einlasskammern (12; 112, 113) des Verstärkergehäuses, dann eine vorgegebene Zeitdauerperiode der Entlastung der oder von einer der Einlasskammern des Verstärkergehäuses vorfestlegt.

3. System nach einem der vorhergehenden Ansprüche, wobei die Mittel zur Schätzung der Endanstellungen des Kolbens (20; 120) Mittel (80) zur Messung des Drucks an einem Port des Gehäuses umfassen.

4. System nach vorhergehendem Anspruch, wobei die Mittel zur Schätzung der Endstellungen des Kolbens (20; 120) ausgelegt sind, um ein Endstellungssignal zu erzeugen, wenn die Mittel zur Druckmessung einen stabilen Druck über einen bestimmten Zeitraum erkennen.

5. System nach einem der Ansprüche 3 oder 4, wobei die Mittel zur Schätzung der Endstellungen des Kolbens (20; 120) ausgelegt sind, um ein Endstellungssignal zu erzeugen, wenn die Mittel zur Druckmessung einen stabilen Druck erkennen, der gleich einem Referenzdruck ist, der bei fehlender Bewegung des Kolbens (20; 120) herrscht.

6. System nach einem der Ansprüche 3 bis 5, wobei die Mittel zur Schätzung der Endstellungen des Kolbens (20; 120) ausgelegt sind, um den Druck am Einlass der oder von einer der Niederdruckeinlasskammern (12; 112, 113) für die Ausfahrphase des Kolbens (20; 120) zu messen.

7. System nach einem der Ansprüche 3 bis 6, wobei die Mittel zur Schätzung der Endstellungen des Kolbens (20; 120) ausgelegt sind, um den Druck am Eingang der oder von einer der Hochdruckauslasskammern (14; 114.1; 114.2) für die Phase des Zurückziehens des Kolbens (20; 120) zu messen.

8. System nach einem der vorhergehenden Ansprüche, wobei die Durchflussbeschränkung (50) zwischen dem Versorgungseinlass (40) und dem Verteiler (30; 130) von einer Düse gebildet ist.

9. System nach einem der vorhergehenden Ansprüche, wobei die Durchflussbeschränkung (56) zwischen dem Versorgungseinlass (40) und der oder einer der Auslasskammern (14; 114.1, 114.2) des Gehäuses von einer Düse gebildet ist.

10. System nach einem der vorhergehenden Ansprüche, wobei die Mittel zur Schätzung der Endstellungen des Kolbens (20) ausgelegt sind, um die elektronische Steuerung durch eine Zeitreferenz zu steuern,
wobei die Zeitreferenz für die Versorgungs- und Ausfahrphase des Kolbens (20; 120) vorzugsweise als die Zeit definiert ist, die notwendig ist, um die oder eine der Einlasskammern (12; 112, 113) des Gehäuses zu füllen, wobei der verfügbare Durchfluss bekannt ist, und die Zeitreferenz für die Phase des Zurückziehens des Kolbens (20; 120) ihrerseits als die zwingendere einerseits der Zeit, die zum Füllen der oder von einer der Auslasskammern (14; 114.1, 114.2) notwendig ist, wobei der verfügbare Durchfluss bekannt ist, und andererseits der Zeit, die zum Entleeren der Einlasskammer durch die Druckverluste des Verteilers (30; 130) notwendig ist, definiert ist.

11. System nach einem der vorhergehenden Ansprüche, wobei die Durchflussbeschränkung (50) zwischen dem Versorgungseinlass (40) und dem Verteiler eine erste Durchflussbeschränkung ist und die Durchflussbeschränkung (56) zwischen dem Versorgungseinlass (40) und der oder jeder Auslasskammer (14; 114.1, 114.2) eine zweite Durchflussbeschränkung ist:
- die oder eine der Einlasskammern und die oder eine der Auslasskammern bilden Hauptkammern (12, 14; 112, 113, 114.1, 114.2),
- das Gehäuse (10; 100) weist ferner eine Zwischenkammer (13; 113) auf,
- der Kolben (20; 120) ist translatorisch im Gehäuse (10) angebracht,
- die Einlasskammer besitzt einen Port (11), der abwechselnd als Einlassport für ihre Versorgung und als Auslassport für ihre Entlastung dient und die Auslasskammer besitzt einen Auslassport (15) für ihre Entlastung und einen Einlassport (17) für ihre Versorgung, wobei die Zwischenkammer (13; 113) einen Port (16) besitzt, der abwechselnd als Einlassport für ihre Versorgung und als Auslassport für ihre Entlastung dient,
- der Verteiler (30; 130) ist von einem Drei-Ports-Zwei-Positionen-Ventil gebildet, um die Versorgung und die Entlastung der Einlasskammer und dementsprechend die Versorgung und die Entlastung der Auslasskammer zu steuern,
- der Verteiler hat:
-- einen ersten Port (32), der über die erste Durchflussbeschränkung (50), die typischerweise von einer Düse gebildet ist, mit dem Versorgungseinlass (40) verbunden ist,
-- einen zweiten Port (34), der mit der Zwischenkammer (13; 113) und einem Reservoir verbunden ist, und
-- einen dritten Port (36), der mit der Einlasskammer verbunden ist, wobei in einer ersten Position des Verteilers (30) der erste Port (32) mit dem dritten Port (36) verbunden ist und in einer zweiten Position der dritte Port (36) mit dem zweiten Port (34) verbunden ist,
- wobei die zweite Durchflussbeschränkung (56), typischerweise eine Düse, zwischen dem Auslass der ersten Durchflussbeschränkung (50) und einem Druckmesspunkt (80) platziert ist,
- wobei eine dritte Durchflussbeschränkung (58), typischerweise eine Düse, zwischen dem Auslass der zweiten Beschränkung (56) und einem mit dem Reservoir verbundenen Auslass (52) platziert ist,
- wobei ein erstes Rückschlagventil (60; 60.1, 60.2) zwischen dem Auslass (15) der Auslasskammer und einem Auslass (54) angeordnet ist, an dem der von der Vorrichtung bereitgestellte hydraulische Hochdruck verfügbar ist, und
- wobei ein zweites Rückschlagventil (70: 70.1, 70.2) zwischen dem Einlass (17) der Auslasskammer und dem Messpunkt (80) platziert ist.

12. System nach einem der vorhergehenden Ansprüche, wobei der Verteiler (30; 130) aus einem Ventil gebildet ist, das eine hydraulische Rückkopplung umfasst, die geeignet ist, den Wert des auf die Einlasskammer (12; 112, 113) des Gehäuses (10; 100) ausgeübten Drucks voreinzustellen.

13. System nach einem der Ansprüche 1 bis 10, das zwei Kammern (114.1, 114.2) umfasst, die mit Druckerhöhung jeweils auf den Vor- und Rücklaufwegen des Kolbens (120) arbeiten,
wobei die Vorrichtung vorzugsweise eine Symmetrie in Bezug auf die Mittelebene des Abschnitts (122) mit großem Querschnitt des Kolbens aufweist.

14. System nach vorhergehendem Anspruch, wobei:
- der Kolben (120) einen zentralen Abschnitt (122) mit großem Querschnitt umfasst, der jeweils auf beiden Seiten durch zwei Abschnitte (124.1, 124.2) mit kleinerem Querschnitt verlängert wird,
- das Gehäuse (100) eine zentrale Kammer (111) besitzt, in der sich der Abschnitt (122) mit großem Querschnitt des Kolbens bewegt,
wobei der Abschnitt (122) mit großem Querschnitt des Kolbens (120) die zentrale Kammer (111) in zwei Unterkammern unterteilt, die jeweils und abwechselnd je nach dem Bewegungszyklus des Kolbens hin oder zurück Einlasskammer (112) und Zwischenkammer (113) bilden,
wobei das Gehäuse (100) außerdem auf beiden Seiten der zentralen Kammer (111) zwei Seitenkammern besitzt, die abwechselnd die Hochdruckauslasskammern (114.1, 114.2) bilden, die jeweils einen der Abschnitte (124.1, 124.2) mit kleinem Querschnitt des Kolbens aufnehmen,
- die Vorrichtung Rückschlagventile (70.1, 70.2) umfasst, die mit den beiden Auslasskammern (114.1, 114.2) verbunden sind,
- die Vorrichtung zusätzliche Rückschlagventile (60.1, 60.2) umfasst, die jeweils mit den Auslasskammern (114.1, 114.2) verbunden sind und in eine Leitung (54), die mit dem Einlass eines Druckspeichers verbunden ist, in Richtung der Auslasskammern (114.1, 114.2) zum Druckspeicher verlaufend, münden,
- die Vorrichtung eine Druckquelle (160) umfasst und
- der Verteiler (130) abwechselnd eine der beiden Unterkammern der Hauptkammer (111) mit der Druckquelle (160) und jeweils mit einem Reservoir (172) mit atmosphärischem Druck verbindet.

15. Fahrzeug, das ein System nach einem der vorhergehenden Ansprüche umfasst.

16. Verfahren zur Verstärkung des hydraulischen Drucks mit Hilfe eines Gehäuses (10; 100), das mindestens eine Niederdruckeinlasskammer (12; 112, 113) und mindestens eine Hochdruckauslasskammer (14; 114.1, 114.2) mit unterschiedlichen Querschnitten aufweist, die einen gestuften Kolben (20; 120) aufnehmen, der zwei Kolbenabschnitte (22, 24; 122, 124) mit jeweils komplementären Querschnitten der Kammern umfasst,
wobei das Verfahren den Schritt umfasst, der darin besteht, die Bewegungen des Kolbens (20; 120) mit Hilfe einer elektronischen Steuerung eines Verteilers (30; 130) zu steuern, wobei der Verteiler die Versorgung der oder jeder Niederdruckeinlasskammer (12; 112, 113) steuert,
und mittels:
- einer Durchflussbeschränkung (50) zwischen einem Versorgungseinlass (40) und dem Verteiler (30; 130), und/oder
- einer Durchflussbeschränkung (56) zwischen dem Versorgungseinlass (40) und der oder jeder Auslasskammer,
wobei das Verfahren **dadurch gekennzeichnet ist, dass** der Steuerschritt durch Steuern der elektronischen Steuerung durch Mittel zur Schätzung der Endstellungen des Kolbens stattfindet, ohne einen Endstellungssensor oder mechanischen Endstellungs-Endanschlag anzuwenden.

## Claims

1. System comprising:
- a hydraulic pressure amplifying device comprising:
- a casing (10; 100) including at least one low-pressure inlet chamber (12; 112, 113) and at least one high-pressure outlet chamber (14; 114.1, 114.2) with different cross sections which house a staged piston (20; 120) comprising two piston sections (22, 24; 122, 124.1, 124.2) with cross sections respectively matching the chambers (12, 14; 112, 113, 114.1, 114.2),
- a feed inlet (40)
- means (30; 130) for controlling the movement of the piston (20; 120), the control means being formed
- by a distributor (30; 130) which controls the feeding of the or of each low-pressure inlet chamber (12; 112, 113) and
- by an electronic control of the distributor, the control means also comprising:
- a flow restriction (50) between the feed inlet (40) and the distributor (30; 130), and/or
- a flow restriction (56) between the feed inlet (40) and the or each outlet chamber (14; 114.1, 114.2)
**characterized in that** the system comprises means for estimating the ends-of-stroke of the piston (20; 120),
the estimation means being configured to estimate the ends-of-stroke of the piston without an end-of-stroke sensor or a mechanical end-of-stroke stop and to control the electronic control.

2. System according to the preceding claim, wherein the means for estimating the ends-of-stroke of the piston (20) are configured to control the electronic control by a time base, preferably the estimation of the ends-of-stroke being defined by the sequence imposed by the time base which cyclically predefines an imposed duration period for feeding the or one of the inlet chambers (12; 112, 113) of the amplifier casing, then an imposed duration discharge period of the or of one of the inlet chambers of the amplifier casing.

3. System according to one of the preceding claims, wherein the means for estimating the ends-of-stroke of the piston (20; 120) comprise means (80) for measuring the pressure on a port of the casing.

4. System according to the preceding claim wherein the means for estimating the ends-of-stroke of the piston (20; 120) are configured to generate an end-of-stroke signal when the pressure measurement means detect a stable pressure over a predetermined period.

5. System according to one of claims 3 or 4, wherein the means for estimating the end-of-stroke of the piston (20; 120) are configured to generate an end-of-stroke signal when the pressure measurement means detect a stable pressure equal to a reference pressure prevailing in the absence of movement of the piston (20; 120).

6. System according to one of claims 3 to 5, wherein the means for estimating the end-of-stroke of the piston (20; 120) are configured to measure the pressure at the inlet of the or of one of the low-pressure inlet chambers (12; 112, 113) for the extension phase of the piston (20; 120).

7. System according to one of claims 3 to 6, wherein the means for estimating the end-of-stroke of the piston (20; 120) are configured to measure the pressure at the inlet of the or of one of the high-pressure outlet chambers (14; 114.1, 114.2) for the retraction phase of the piston (20; 120).

8. System according to one of the preceding claims, wherein the flow restriction (50) between the feed inlet (40) and the distributor (30; 130) is formed by an atomizer.

9. System according to one of the preceding claims, wherein the flow restriction (56) between the feed inlet (40) and the or one of the outlet chambers (14; 114.1, 114.2) of the casing is formed by an atomizer.

10. System according to one of the preceding claims, wherein the means for estimating the ends-of-stroke of the piston (20) are configured to control the electronic control by a time reference, preferably the time reference for the feed and piston (20; 120) extension phase, being defined as being the time necessary for filling the or one of the inlet chambers (12; 112, 113) of the casing knowing the available flow rate and the time reference for the piston (20; 120) retraction phase, being for its part defined as being the most constraining, on the one hand, of the time necessary for filling the or one of the outlet chambers (14; 114.1, 114.2) knowing he available flow rate and, on the other hand, of the time necessary for emptying the inlet chamber through the head losses of the distributor (30; 130).

11. System according to one of the preceding claims, wherein the flow restriction (50) between the feed inlet (40) and the distributor being a first flow restriction, and the flow restriction (56) between the feed inlet (40) and the or each exit chamber (14; 114.1, 114.2) being a second flow restriction:
- the or one of the inlet chambers and the or one of the outlet chambers form main chambers (12, 14; 112, 113, 114.1, 114.2),
- the casing (10; 100) also includes an intermediate chamber (13; 113),
- the piston (20; 120) is mounted in translation in the casing (10),
- the inlet chamber has a port (11) which serves alternately as an inlet port for its feeding and as an outlet port for its discharge and the outlet chamber has an outlet port (15) for its discharge and in inlet port (17) for its feeding, the intermediate chamber (13; 113) having a port (16) which serves alternately as an inlet port for its feeding and as an outlet port for its discharge
- the distributor (30; 130) is formed from three-port valve and two positions for controlling the feed and the discharge of the inlet chamber and consequently of the feed and discharge of the outlet chamber,
- the distributor has:
-- a first port (32 connected to the feed inlet (40) by means of the first flow restriction (50), formed typically by an atomizer,
-- a second port (34) connected to the intermediate chamber (13; 113) and to a reservoir, and
**--** a third port (36) connected to the inlet chamber, in a first position of the distributor (30), the first port (32) being connected to the third port (36) and in a second position, the third port (36) being connected to the second port (34),
- the second flow restriction (56), typically an atomizer, being placed between the outlet of the first restriction (50) and a pressure measurement point (80),
- a third flow restriction (58), typically an atomizer, being placed between the outlet of the second restriction (56) and an outlet (52) connected to the reservoir,
- a first check valve (60; 60.1, 60.2) being placed between the outlet (15) of the outlet chamber and an outlet (54) at which the high hydraulic pressure supplied by the device is available and
- a second check valve (70; 70.1, 70.2) being placed between the inlet (17) of the outlet chamber and the measurement point (80).

12. System according to one of the preceding claims, wherein the distributor (30; 130) is formed of a valve comprising a hydraulic counter-reaction, suited for prepositioning the pressure value applied to the or to each inlet chamber (12; 112, 113) of the casing (10; 100).

13. System according to one of claims 1 to 10, which comprises two chamber (114.1, 114.2) working in pressure augmentation respectively on the extension and return strokes of the piston (120), the device preferably being symmetrical relative to the median plane of the section (122) of the piston with the large cross-section.

14. System according to the preceding claim, wherein:
- the piston (120) comprises a central section (122) with a large cross section, continued respectively on either side by two sections (124.1, 124.2) with a smaller cross section,
- the casing (100) has a central chamber (111) wherein the section (122) of the piston with the large cross section moves,
the section (122) of the piston (120) with the large cross section dividing the central chamber (111) into two sub-chambers which form respectively and alternately the inlet chamber (112) and the intermediate chamber (113) depending on whether the movement cycle of the piston is extending or returning,
the casing (100) having moreover on either side of the central chamber (111) two lateral chambers forming alternately high-pressure outlet chambers (114.1, 114.2) respectively accommodating one of the sections (124.1, 124.2) of the piston with a small cross section,
- the device comprises check valves (70.1, 70.2) connected to the two outlet chambers (114.1, 114.2),
- the device comprises additional check valves (60.1, 60.2) connected respectively to the outlet chambers (114.1, 114.2) and leading to a pipe (54) connected to the inlet of a pressure accumulator, passing in the direction from the outlet chambers (114.1, 114.2) to the pressure accumulator,
- the device comprises a pressure source (160) and
- the distributor (130) connects alternately one of the two sub-chambers of the main chamber (111) to the pressure source (160) and respectively to a reservoir (172) at atmospheric pressure.

15. Vehicle that comprises a system conforming to one of the preceding claims.

16. Method for amplifying hydraulic pressure by means of a casing (10; 100) comprising at least one low-pressure inlet chamber (12; 112, 113) and at least one high-pressure outlet chamber (14; 114.1, 114.2) with different cross sections, which house a staged piston (20; 120) comprising two piston sections (22, 24; 122 124) with cross sections that respectively match the chambers,
the method comprising the step consisting of controlling the movements of the piston (20; 120) by means of an electronic control of a distributor (30; 130), the distributor controlling the feeding of the or each low-pressure inlet chamber (12; 112, 113), and by means of:
- a flow restriction (50) between a feed inlet (40) and the distributor (30; 130) and/or
- a flow restriction (56) between the feed inlet (40) and the or each outlet chamber,
the method being **characterized in that** the control step takes place by controlling the electronic control by means of estimating the ends-of-stroke of the piston without using an end-of-stroke sensors or a mechanical end-of-stroke stop.
